# EUROPEAN PATENT APPLICATION

(11) **EP 3 506 049 A1**
(43) Date of publication of application: **03.07.2019**
(21) Application number: 17382904.5
(22) Date of filing: 26.12.2017
(51) Int. Cl.: G06F 1/26, G06F 21/75, G06F 21/81

(54) **COMPUTING DEVICE**

(71) Applicant: Ikerlan, S. Coop., 20500 Mondragon (ES)
(72) Inventor: ARMENDARIZ HUICI, Igor, 20570 BERGARA (ES); GONZALEZ GONZALEZ, David, 01012 VITORIA - GASTEIZ (ES); LUQUE RODRIGUEZ, Omar, 20212 OLABERRIA (ES)
(74) Representative: Igartua, Ismael

(57) **Abstract**

Computing device comprising a logic computing unit (11) and a connection (10) to the outside to receive electric power from an external power supply (200), and a security system (100). The security system (100) comprises a first control switch (15) between the logic computing unit (11) and the connection (10); a power management system (12) connected to the logic computing unit (11); a second control switch (13) between the power management system (12) and the logic computing unit (11); and a control unit (14) communicated with the control switches (13, 15) and the power management system (12) and configured for opening and closing said control switches (13, 15) in a controlled manner. During its logic operation cycles, the logic control unit (11) can therefore be powered from the external power supply (200) and/or the power management system (12).

## Description

### TECHNICAL FIELD

The present invention relates to computing devices such as, for example, a microcontroller or an FPGA (Field Programmable Gate Array).

### PRIOR ART

The use of electronic computing devices such as microcontrollers or FPGAs is very widespread for a number of applications. These devices often operate with confidential information that must be kept secret so that it does not fall into the wrong hands. To that end, different methods are known for encrypting confidential information so that it is illegible for a third party.

The consumption of a logic control unit of the computing device is known to depend on the information with which it operates such that if a third party were to gain access to said consumption, it may be capable of obtaining said information, or at least part of it, as disclosed in patent documents EP3179668A1 and US20020124178A1, for example.

### DISCLOSURE OF THE INVENTION

The object of the invention is to provide a computing device, as defined in the claims.

The computing device, which can be a microprocessor or an FPGA, for example, comprises at least one connection to the outside and a logic computing unit which is communicated with the outside with respect to said computing device through the connection to the outside to receive electric power from an external power supply.

The computing device further comprises a security system. Said security system comprises a first control switch arranged between the logic computing unit and the connection to the outside, such that the logic computing unit is connected to said connection through the first control switch; a power management system connected to the logic computing unit and comprising a power storage device; a second control switch arranged between the power management system and the logic computing unit, such that the power management system is connected to the logic computing unit through the second control switch; and a control unit which is communicated with at least the control switches and configured for opening and closing said control switches in a controlled manner, so that the logic computing unit can be powered, during its logic computing cycles, from the external power supply and/or the power storage system. A logic cycle refers to the algorithm to be run by the logic control unit, and each algorithm may require a different number of logic operations.

Therefore, as a function of how the switches are operated, the configuration of the security system thereby allows for the power consumed by the logic computing unit during its logic computing cycles to not be the same as the power demanded from the outside through the corresponding connection, where said logic computing unit can be powered through the power management system or both (the outside and the power management system). The consumption that a third party may perceive would be the consumption demanded from the outside, which does not have to coincide with the actual device consumption, so the security system provides further security to the device.

These and other advantages and features of the invention will become evident in view of the drawings and the detailed description of the invention.

### DESCRIPTION OF THE DRAWINGS

Figure 1 shows a schematic view of an embodiment of the computing device of the invention.
Figure 2 shows an example of the power consumption of the logic computing unit of the device of Figure 1 during three consecutive logic cycles.
Figure 3 shows a schematic view of another embodiment of the computing device of the invention.
Figure 4 shows the power management system of the computing device of Figure 3.
Figure 5 shows an example of the power consumption of the logic computing unit of the device of Figure 3 during three consecutive logic cycles.

### DETAILED DISCLOSURE OF THE INVENTION

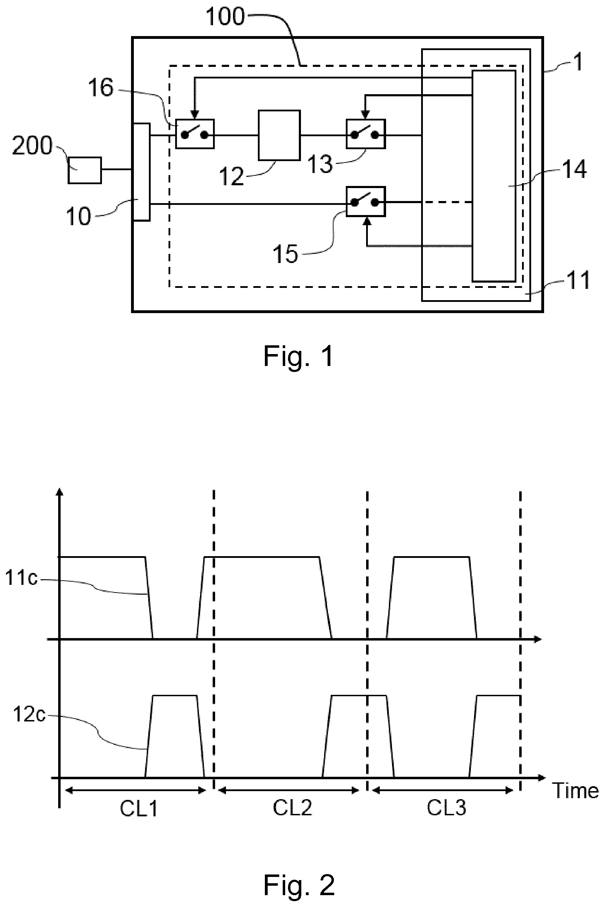

The computing device 1 of the invention comprises a connection 10 to the outside and a logic control unit 11 communicated with the outside of said computing device 1 through the connection 10, as depicted in Figure 1, such that through said connection 10 electric power can be received from an external power supply 200 outside the device 1 when the device 1 is connected to said power supply 200. The logic control unit 11 is in charge of performing the logic operations required in the device 1, and it operates by means of logic computing cycles.

The computing device 1 comprises a security system 100, which is preferably integrated, and the security system 100 comprises:
- a first control switch 15 arranged between the logic control unit 11 and the connection 10, the logic control unit 11 thereby being connected to the connection 10 through the first control switch 15;
- a power management system 12 connected to the logic control unit 11 and preferably comprising at least one capacitor or a battery;
- a second control switch 13 arranged between the power management system 12 and the logic control unit 11, said power management system 12 thereby being connected to the logic control unit 11 through the second control switch 13; and
- a control unit 14 which is communicated with at least the control switches 13 and 15 and configured for opening and closing said control switches 13 and 15 in a controlled manner, so that the logic computing unit 11 can be powered, during its logic computing cycles, from the external power supply 200 and/or the power management system 12, as required and determined by means of control over the control switches 13 and 15.

This enables powering the logic computing unit 11 from the power supply 200 and/or the power management system 12, such that if a third party were to gain unauthorized access to the consumption of the device 1 by means of reading the consumption through the power supply 200, said third party will not be able to know the actual consumption of the logic computing unit 11 since said third party would only be able to detect consumption from said power supply 200, which is not a true representation of said actual consumption.

So as a result of the logic computing unit 11 being provoked by the control unit 14 to also consume power from the power management system 12 in a controlled manner, the third party is prevented from being able to gain access to relevant information that may be obtained from the device 1 through the consumption thereof.

This is even further reinforced by the security system 100 being integrated in the computing device 1, since a third party would furthermore not be able to gain access in any case to the consumption from the power management system 12.

Like the second control switch 13, the first control switch 15 can be an ON-OFF-type switch, such that when it is closed it always allows the same amount of current to pass therethrough, or it can be of another type, where it can allow different amounts of current to pass therethrough, as selected at all times by means of the control unit 14.

The control unit 14 is configured so that not all the electric power required in the logic computing unit 11 during each of its logic computing cycles is supplied through the external power supply 200 by controlling the opening and closing of the control switches 13 and 15, thereby preventing the actual consumption of the logic computing unit 11 during one and the same cycle from matching the power supplied by the power supply 200, thereby assuring to a larger extent that a third party will not be able to gain access to the actual consumption of the logic computing unit 11. To that end, the control unit 14 is configured for controlling the opening and closing of the control switches 13 and 15 as a function of a given control algorithm, which may be pre-determined or may furthermore be random and/or variable. Preferably, the control algorithm may furthermore be configured, but only from the computing unit 11 itself, such that access to the device 1 cannot be gained from the outside thereof in any way, preventing a third party from being able to read it and conclude what the actual consumption is and from being able to alter it, for example.

Figure 2 shows an example of the power consumption of the logic computing unit 11 during three consecutive logic cycles CL1, CL2 and CL3 (the same consumption in the three logic cycles CL1, CL2 and CL3), where the origin of the power consumed by the logic control unit 11 in each logic cycle CL1, CL2 and CL3 is depicted, with the power consumption coming from the power supply 200 being depicted with power trace 11c and the power consumption coming from the power management system 12 being depicted with power trace 12c. Said Figure 2 shows complementary supplies from the storage management system 12 and the external power supply 20, but it is merely an example and does not necessarily have to be like that.

Preferably, the security system 100 further comprises a digital regulator 16 arranged between the power management system 12 and an external power supply outside the device 1, the control unit 14 being communicated with said regulator 16 and configured for opening and closing said regulator 16 in a controlled manner so that said power management system 12 can be loaded from said external power source. Preferably, the power supply is the same power supply 200 powering the logic computing unit 11, so that a third party will not be able to detect the existence of a power management system 12, and the regulator 16 is arranged between the power management system 12 and the connection 10.

The regulator 16 is preferably configured to allow controlling the flow of current allowed to pass therethrough, preferably being a variable-type switch other than an ON-OFF switch.

So even the information acquired by reading the consumption through the power supply leads to error, since not all the consumption is a direct part of the consumption of the logic computing unit 11, because part of it is for loading the power management system 12.

The control unit 14 is configured for controlling the control switches 13 and 15 and the regulator 16 in a coordinated manner, such that the actual loading of the power management system 12 may also be tweaked in order to complicate the extraction of information based on the reading of the consumption of the device 1. This aspect is particularly advantageous with the regulator 16 not being an ON-OFF-type regulator, since the loading rate of the power storage device 120 of the power management system 12 can thereby be controlled as required.

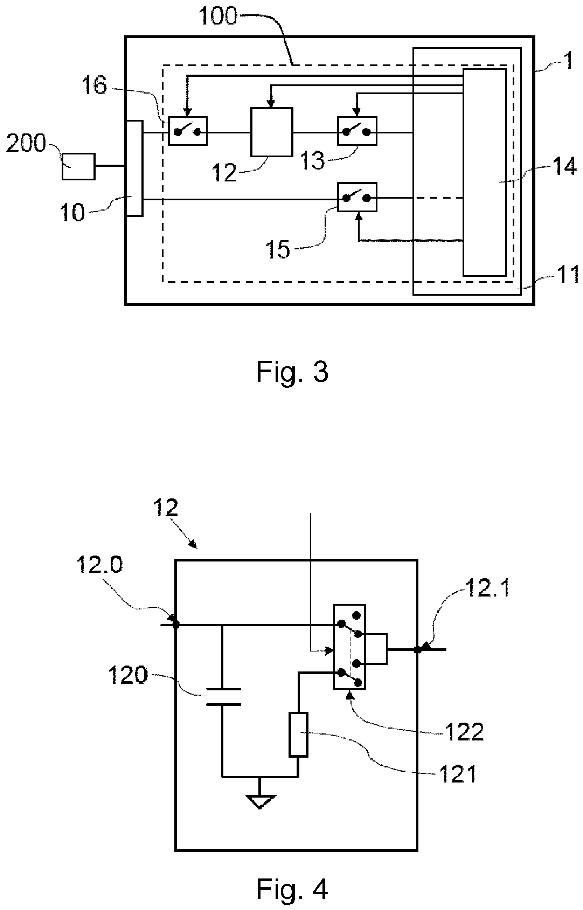

Figure 3 shows another embodiment of the computing device 1 of the invention, with a power management system 12, shown in Figure 4, comprising, in addition to the power storage device 120, a load 121 and a load switch 122 connected in series and forming an electrical branch which is connected in parallel to said power storage device 120. In this case, the control unit 14 is also communicated with the power management system 12 (with the load switch 122) and configured for controlling said load switch 122. The load switch 122 preferably comprises two positions, connecting the output 12.1 of the power management system 12 to the load 121 in one of them (position in which the load 121 consumes power), and connecting said output 12.1 to the power storage device 120 in the other position (the latter being depicted in Figure 4). This even further complicates a third person being able to identify the actual consumption of the logic control unit 11 for a given operation, since even if access to the consumption of the device 1 is gained, at that time the consumption of said device 1 would be higher than the consumption of the logic control unit 11 (since the load 121 would be consuming power). The load 121 comprises at least one impedance, formed preferably by one or more resistive impedances (in series and/or in parallel).

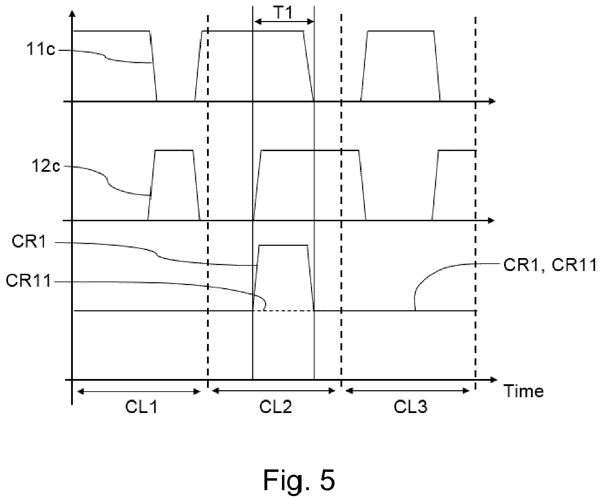

Figure 5 shows an example of the power consumption of the logic computing unit 11 during three consecutive logic cycles CL1, CL2 and CL3 (the same consumption in the three logic cycles CL1, CL2 and CL3), the origin of the power consumed in each logic cycle CL1, CL2 and CL3 is depicted, with the power consumption coming from the power supply 200 being depicted with power trace 11c and the power consumption coming from the power management system 12 being depicted with power trace 12c. Figure 5 furthermore depicts the actual consumption CR1 of the device 1, which does not match the actual consumption CR11 of the logic control unit 11, since said actual consumption CR1 furthermore includes the consumption of the load 121 (in interval T1).

As a result of the inclusion of a load 122, an increase in consumption of the device 1 can thereby be provoked, when and as required, putting up more barriers against the possibility of a third party being able to detect the actual consumption of the logic control unit 11 of the device 1.

In summary, the device 1 comprises a security system 100 that offers a number of possibilities to mask the actual consumption of the logic control unit 11, without it being limited, for example, to preventing consumption from an external power supply when operating with additional information. This furthermore allows sizing the power storage device 120 as required, because if not desired, said power storage device 120 does not have to satisfy any premises, such as supplying all the power that the logic control unit 11 may require in one cycle, for example.

Preferably, the first control switch 15 is usually closed, such that when the computing device 1 is switched on and connected to the external power supply 200, the control unit 14 is powered through the connection 10 to the outside, and control over the control switches 13 and 15 and the regulator 16 is possible from the start.

The computing device 1 preferably comprises an FPGA or a microcontroller, and the control unit 14 is preferably integrated in the logic control unit 11.

## Claims

1. Computing device comprising a logic computing unit (11) and a connection (10) to the outside to receive electric power from an external power supply (200) outside the device (1), **characterized in that** the device (1) comprises a security system (100), the security system (100) comprising a first control switch (15) arranged between the logic computing unit (11) and the connection (10) to the outside, said logic computing unit (11) being connected to the connection (10) to the outside through the first control switch (15); a power management system (12) connected to the logic computing unit (11), said power management system (12) comprising a power storage device (120); a second control switch (13) arranged between the power management system (12) and the logic computing unit (11), said power management system (12) being connected to the logic computing unit (11) through the second control switch (13); and a control unit (14) which is communicated with at least the control switches (13, 15) and configured for opening and closing said control switches (13) in a controlled manner, so that the logic computing unit (11) can be powered, during its logic operation cycles, from the external power supply (200) and/or the power management system (12).

2. Computing device according to claim 1, wherein the control unit (14) is configured so that all the electric power consumed by the computing unit (11) in one and the same logic operation cycle differs from the power supplied through the external power supply (200) by controlling the opening and closing of the control switches (13, 15).

3. Computing device according to claim 1 or 2, wherein the control unit (14) is configured for controlling the opening and closing of the control switches (13, 15) as a function of a given control algorithm.

4. Computing device according to claim 3, wherein the control algorithm can be configured through the computing unit (11).

5. Computing device according to any of claims 1 to 4, wherein the control unit (14) is configured for controlling the opening and closing of the control switches (13, 15) in a coordinated manner.

6. Computing device according to any of claims 1 to 5, comprising a regulator (16) arranged between the power management system (12) and the connection (10) to the outside of the computing device (1), the control unit (14) being communicated with said regulator (16) and configured for operating said regulator (16) in a controlled manner so that the power storage device (120) of the power management system (12) can be loaded from the outside through said connection (10) to the outside, when and as required.

7. Computing device according to claim 6, wherein the regulator (16) is configured for allowing the passage therethrough of different amounts of current, as selected at all times by means of the control unit (14).

8. Computing device according to claim 6 or 7, wherein the regulator (16) is a variable switch.

9. Computing device according to any of claims 6 to 8, wherein the control unit (14) is configured for controlling the opening and closing of the control switches (13, 15) and the regulator (16) in a coordinated manner.

10. Computing device according to any of claims 1 to 9, wherein the control unit (14) is integrated in the logic computing unit (11).

11. Computing device according to any of claims 1 to 10, wherein the power management system (12) further comprises a load (121) and a load switch (122) connected in series and forming an electrical branch which is connected in parallel to the power storage device (120), the control unit (14) being communicated with said load switch (122) and configured for controlling the opening and closing of said load switch (122).

12. Computing device according to any of claims 1 to 11, wherein the first control switch (15) is usually closed, such that when the computing device (1) is connected to the external power supply (200), the control unit (14) which is communicated with the control switches (13, 15) is powered through the connection (10) to the outside of the device (1).

13. Computing device according to any of claims 1 to 12, comprising an FPGA or a microcontroller.
